# FASCICULE DE BREVET EUROPEEN

(11) **EP 3 627 467 B1**
(45) Date de publication et mention de la délivrance du brevet: **02.06.2021**
(21) Numéro de dépôt: 19194892.6
(22) Date de dépôt: 02.09.2019
(51) Int. Cl.: G08B 21/02, B60R 1/00

(54) **PROCÉDÉ ET DISPOSITIF DE DÉTECTION DE L ÉTAT D'UN CAPOT AVANT D'UN VÉHICULE AUTOMOBILE PAR COMPARAISON DE CHAMPS DE VISION**
VERFAHREN UND VORRICHTUNG ZUR DETEKTION DES ZUSTANDS EINER MOTORHAUBE EINES KRAFTFAHRZEUGS DURCH VERGLEICH VON SICHTFELDERN
METHOD AND DEVICE FOR DETECTING THE STATE OF A FRONT BONNET OF A MOTOR VEHICLE BY COMPARING FIELDS OF VIEW

(30) Priorité: 20.09.2018 FR 1858541
(43) Date de publication de la demande: 25.03.2020
(73) Titulaire: PSA Automobiles SA, 78300 Poissy (FR)
(72) Inventeur: SPOLAORE, Guillaume, 94370 SUCY EN BRIE (FR); CHABERNAUD, Samuel, 92700 COLOMBES (FR)

(56) Documents cités:
- WO-A2-2015/189375
- DE-U1- 29 811 086
- US-A1- 2004 119 823

## Description

L'invention concerne les véhicules automobiles comprenant un capot avant, et plus précisément la détection de l'état dans lequel se trouve le capot avant de tels véhicules.

Comme le sait l'homme de l'art, certains véhicules (automobiles) comprennent un dispositif de détection chargé de détecter l'ouverture de leur capot avant. Ce dispositif de détection comprend généralement un contacteur qui est couplé au mécanisme de verrouillage/déverrouillage du capot avant, comme cela est notamment décrit dans le document brevet DE 10148639. Lorsque ce contacteur détecte l'ouverture du capot avant, il génère une alarme destinée à informer le conducteur du véhicule et éventuellement à déclencher la mise en œuvre d'une stratégie sécuritaire, comme par exemple l'arrêt du groupe moto-ventilateur (ou GMV).

Ce type de dispositif de détection nécessite un contacteur dédié et une implantation spécifique imposant généralement une adaptation du mécanisme de verrouillage/déverrouillage. En outre, il induit une augmentation de la masse du véhicule, fait l'objet d'une usure mécanique, peut faire l'objet de dysfonctionnements, et nécessite généralement une connectique spécifique pour la transmission de son signal (ou message) d'alarme et son alimentation électrique. De plus, ce type de dispositif de détection ne permet pas toujours de détecter, et donc de signaler, l'endommagement d'un capot avant consécutivement à un choc.

L'invention a donc notamment pour but d'améliorer la situation.

Le document DE 298 11 086 U1 divulgue un procédé selon le préambule de la revendication 1 et un dispositif selon le préambule de la revendication 8.

L'invention propose notamment à cet effet un procédé de détection destiné à être mis en œuvre dans un véhicule de type automobile et comprenant un capot avant ayant un état normal dans lequel il est totalement fermé afin de circuler et une caméra couplée à une partie supérieure d'un pare-brise et acquérant des images vers l'avant du véhicule.

Ce procédé de détection se caractérise par le fait qu'il comprend :
- une première étape dans laquelle on détermine dans chaque image acquise un champ de vision de la caméra, puis on compare chaque champ de vision déterminé à un champ de vision de référence, déterminé dans une image de référence acquise lorsque le capot avant était dans son état normal, et
- une seconde étape dans laquelle, en cas de détermination d'au moins une différence de champ de vision, on considère que le capot avant n'est pas dans son état normal, et on génère une alarme afin d'avertir un conducteur du véhicule.

Ainsi, on peut désormais surveiller l'état dans lequel est placé le capot avant d'un véhicule en utilisant des images acquises par une caméra embarquée, possiblement pour au moins une autre fonction, et donc sans qu'il faille coupler un contacteur au mécanisme de verrouillage/déverrouillage du capot avant.

Le procédé de détection selon l'invention peut comporter d'autres caractéristiques qui peuvent être prises séparément ou en combinaison, et notamment :
- dans sa première étape on peut déterminer dans chaque image acquise le champ de vision de la caméra en déterminant chaque zone permettant une observation au-delà d'une extrémité avant du capot avant ;
- dans sa seconde étape on peut comparer la différence de champ de vision déterminée à au moins deux différences de champ de vision prédéfinies, correspondant respectivement à des problèmes différents au niveau du capot avant, afin de déterminer parmi ces problèmes celui qui correspond à la différence de champ de vision prédéfinie qui est similaire à la différence de champ de vision déterminée, et on peut générer une alarme qui est représentative de ce problème déterminé ;
   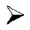 dans sa seconde étape les problèmes peuvent être choisis parmi un déverrouillage partiel du capot avant correspondant à une première réduction par le bas d'un secteur angulaire d'observation suivant une direction verticale, une déformation du capot avant correspondant à une deuxième réduction par le bas du secteur angulaire d'observation suivant cette direction verticale, supérieure à cette première réduction, et une ouverture au moins partielle du capot avant correspondant au moins à une troisième réduction dans une partie centrale du secteur angulaire d'observation suivant cette direction verticale, supérieure à cette deuxième réduction ;
- dans sa seconde étape on peut générer une alarme qui requiert une action sur le déplacement du véhicule ;
- dans sa seconde étape on peut générer l'alarme en cas de détermination d'une même différence de champ de vision dans au moins deux images acquises successivement.

L'invention propose également un produit programme d'ordinateur comprenant un jeu d'instructions qui, lorsqu'il est exécuté par des moyens de traitement, est propre à mettre en œuvre le procédé de détection décrit ci-avant pour détecter un état dans lequel est placé un capot avant d'un véhicule automobile.

L'invention propose également un dispositif de détection destiné à équiper un véhicule de type automobile et comprenant un capot avant ayant un état normal dans lequel il est totalement fermé afin de circuler et une caméra couplée à une partie supérieure d'un pare-brise et acquérant des images vers l'avant du véhicule.

Ce dispositif de détection se caractérise par le fait qu'il comprend au moins un calculateur :
- déterminant dans chaque image acquise un champ de vision de la caméra, puis
- comparant chaque champ de vision déterminé à un champ de vision de référence, déterminé dans une image de référence acquise lorsque le capot avant était dans son état normal, et
- en cas de détermination d'au moins une différence de champ de vision, considérant que le capot avant n'est pas dans son état normal, et déclenchant la génération d'une alarme afin d'avertir un conducteur du véhicule.

L'invention propose également un véhicule automobile comprenant un capot avant ayant un état normal dans lequel il est totalement fermé afin de circuler, une caméra couplée à une partie supérieure d'un pare-brise et acquérant des images vers l'avant du véhicule, et un dispositif de détection du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue en coupe dans un plan longitudinal, une partie avant d'un véhicule équipé d'une caméra, d'un exemple de réalisation d'un dispositif de détection selon l'invention, et d'un capot avant placé dans un état normal (totalement fermé),
- la figure 2 illustre schématiquement et fonctionnellement, dans une vue en coupe dans un plan longitudinal, le véhicule de la figure 1 avec son capot avant placé dans un premier état anormal (partiellement ouvert),
- la figure 3 illustre schématiquement et fonctionnellement, dans une vue en coupe dans un plan longitudinal, le véhicule de la figure 1 avec son capot avant placé dans un second état anormal (totalement ouvert), et
- la figure 4 illustre schématiquement un exemple d'algorithme mettant en œuvre un procédé de détection selon l'invention.

L'invention a notamment pour but de proposer un procédé de détection, et un dispositif de détection DD associé, destinés à détecter l'état dans lequel est placé le capot avant CV d'un véhicule V de type automobile.

Dans ce qui suit, on considère, à titre d'exemple non limitatif, que le véhicule automobile V est une voiture. Mais l'invention n'est pas limitée à ce type de véhicule automobile. Elle concerne en effet tout type de véhicule automobile comprenant un capot avant monté à rotation dans une partie avant, par exemple au voisinage du bord inférieur du pare-brise.

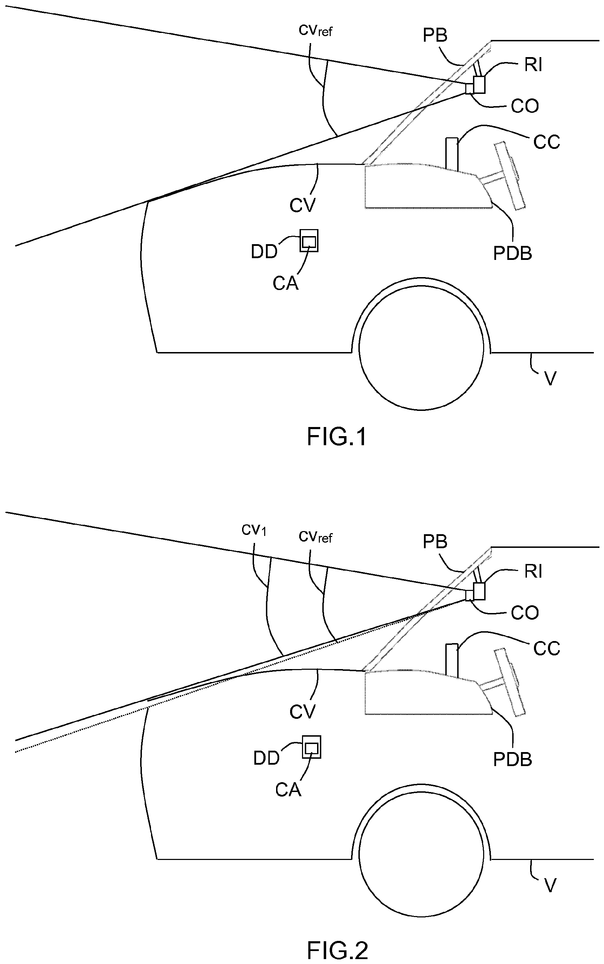

On a schématiquement représenté sur les figures 1 à 3 un véhicule (automobile) V équipé d'une caméra CO, d'un dispositif de détection DD selon l'invention, et d'un combiné central CC comprenant un écran d'affichage chargé d'afficher des images.

On notera que dans l'exemple illustré non limitativement sur la figure 1, le véhicule V ne comprend qu'un seul écran d'affichage faisant partie du combiné central CC installé de façon permanente dans ou sur la planche de bord PDB. Mais le véhicule V peut comprendre plusieurs écrans d'affichage installés de façon permanente ou temporaire. Ainsi, il peut comprendre un écran d'affichage dans son tableau de bord (fixe) et/ou une partie de son pare-brise PB peut servir d'écran d'affichage pour un dispositif d'affichage de type dit « tête haute » et/ou il peut transporter de façon temporaire un téléphone mobile intelligent (ou « smartphone ») ou une tablette électronique comportant un écran d'affichage, par exemple.

Comme évoqué précédemment, l'invention propose notamment un procédé de détection destiné à permettre la détection de l'état dans lequel est placé le capot avant CV du véhicule V. Ce procédé comprend des première 10-30 et seconde 40-80 étapes qui peuvent être mises en œuvre au moins partiellement par un dispositif de détection DD selon l'invention, embarqué dans le véhicule V et comprenant, comme illustré sur la figure 1, au moins un calculateur CA. Par exemple, ce calculateur CA peut comprendre au moins un processeur de signal numérique (ou DSP (« Digital Signal Processor »)), éventuellement associé à au moins une mémoire.

On notera que dans l'exemple illustré non limitativement sur la figure 1, le dispositif de détection DD est un équipement qui est installé de façon permanente dans le véhicule V. Mais au moins le calculateur CA du dispositif de détection DD pourrait être installé dans un équipement de communication mobile, temporairement embarqué dans le véhicule V (comme par exemple un téléphone intelligent ou une tablette électronique), et pouvant communiquer par voie d'ondes et/ou par voie filaire avec au moins un équipement électronique du véhicule V.

L'invention nécessite que le véhicule V soit équipé d'au moins une caméra CO couplée à une partie supérieure de son pare-brise PB et chargée d'acquérir des images numériques vers l'avant, et donc au-dessus de, et devant, son capot avant CV, ainsi qu'éventuellement sur une partie avant de ses deux côtés latéraux. Cette caméra CO peut éventuellement faire partie du dispositif de détection DD, mais cela n'est pas obligatoire. En effet, la caméra CO peut éventuellement acquérir des images utiles à au moins une autre fonction que celle de détection décrite plus loin.

On notera que dans l'exemple illustré non limitativement sur la figure 1, la caméra CO est installée dans le rétroviseur intérieur central RI qui est solidarisé fixement à la partie supérieure du pare-brise PB. Mais cette caméra CO pourrait être solidarisée fixement à la partie supérieure du pare-brise PB ou intégrée dans une partie externe du toit ou pavillon.

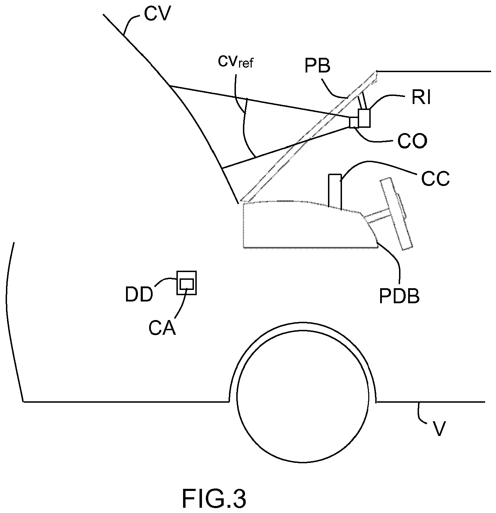

Comme illustré sur la figure 1, cette caméra CO a un champ de vision de référence cv_{ref} qui est maximal lorsque le capot avant CV est placé dans un état dit normal du fait qu'il est maintenu totalement fermé par un mécanisme de verrouillage/déverrouillage (non représenté). On notera que dans ce qui suit on considère que le capot avant CV est placé dans un premier état dit anormal, illustré sur la figure 2, lorsqu'il est partiellement ouvert en étant partiellement retenu par un cran du mécanisme de verrouillage/déverrouillage, et dans un second état également dit anormal, illustré sur la figure 3, lorsqu'il est au moins partiellement ouvert sans être retenu par le mécanisme de verrouillage/déverrouillage.

Le premier état anormal résulte d'un déverrouillage partiel du capot avant CV, et correspond à une première réduction par le bas du secteur angulaire d'observation de la caméra CO suivant la direction verticale. En d'autres termes, lorsque le capot avant CV est placé dans son premier état anormal, le champ de vision de la caméra CO, noté cv₁ sur la figure 2, est légèrement réduit (en bas) par rapport à son champ de vision de référence cv_{ref}.

Le second état anormal résulte d'un déverrouillage total du capot avant CV, et correspond à une autre réduction dans au moins une partie centrale du secteur angulaire d'observation de la caméra CO suivant la direction verticale. En d'autres termes, lorsque le capot avant CV est placé dans son second état anormal (voir figure 3), le champ de vision de la caméra CO est réduit, voire nul, par rapport à son champ de vision de référence cv_{ref}. Dans l'exemple illustré non limitativement sur la figure 3, le capot avant CV est placé dans un second état anormal dans lequel il est totalement ouvert et induit un champ de vision nul de la caméra CO (ce dernier est donc non seulement réduit dans sa partie centrale, mais également dans ses parties inférieure (bas) et supérieure (haut)).

Dans la première étape 10-30 du procédé de détection, selon l'invention, on (le calculateur CA) détermine dans chaque image acquise par la caméra CO le champ de vision de cette dernière (CO). Puis, on (le calculateur CA) compare chaque champ de vision déterminé au champ de vision de référence cv_{ref}, qui a été préalablement déterminé dans une image de référence acquise lorsque le capot avant CV était dans son état normal (illustré sur la figure 1).

On comprendra qu'après chaque acquisition d'une image par la caméra CO, le calculateur CA détermine le champ de vision en cours de la caméra CO puis compare ce champ de vision en cours à cv_{ref}.

Par exemple, dans la première étape 10-30 on (le calculateur CA) peut déterminer dans chaque image acquise le champ de vision en cours de la caméra CO en déterminant chaque zone permettant une observation au-delà de l'extrémité avant du capot avant CV (et donc devant le véhicule V). On considère en effet que le champ de vision en cours de la caméra CO est ce qui lui permet d'observer l'environnement au moins devant le capot avant CV. Dans l'exemple de la figure 3, ce champ de vision en cours est nul car le capot avant CV empêche toute observation de l'environnement devant le véhicule V par la caméra CO. Mais on pourrait envisager que la forme arrondie du bord inférieur (ou arrière) du capot avant CV, situé à proximité du pare-brise PB, permette une observation d'une toute petite partie de l'environnement devant le véhicule V dans une zone comprise entre ce bord inférieur et le compartiment moteur, lorsque le capot avant CV est totalement ouvert. De même, on pourrait envisager que lorsque le capot avant CV est totalement ouvert il n'obstrue pas une partie supérieure du champ de vision de la caméra CO. Dans ce cas, la caméra CO peut observer une petite partie de l'environnement devant le véhicule V dans une zone située au-dessus du bord supérieur (ou avant) du capot avant CV.

Dans la seconde étape 40-80 du procédé de détection on (le calculateur CA) considère que le capot avant CV n'est pas dans son état normal en cas de détermination d'au moins une différence de champ de vision dans la première étape 10-30, et on génère une alarme afin d'avertir le conducteur du véhicule V. On comprendra que c'est le calculateur CA qui déclenche la génération de cette alarme.

L'alarme peut se présenter sous la forme d'un signal analogique ou numérique ou d'un message textuel ou sonore, voire haptique. Dans le cas d'un message textuel, ce dernier peut être affiché sur au moins un écran d'affichage installé de façon permanente ou temporaire dans le véhicule V. Par exemple, cet écran d'affichage peut être celui du combiné central CC, ou celui du tableau de bord du véhicule V, ou une partie du pare-brise PB du véhicule V qui est utilisée par un dispositif d'affichage de type tête haute, ou encore celui d'un équipement de communication mobile (tel qu'un téléphone intelligent ou une tablette électronique). Ce message textuel peut être éventuellement affiché de façon simultanée sur au moins deux écrans d'affichage. Dans le cas d'un message sonore, ce dernier peut être diffusé par au moins un haut-parleur installé de façon permanente ou temporaire dans le véhicule V.

Grâce à l'invention il est désormais possible de surveiller l'état dans lequel est placé le capot avant CV d'un véhicule V en utilisant des images acquises par une caméra CO embarquée, possiblement pour au moins une autre fonction (comme par exemple une assistance à la conduite du véhicule (éventuellement de type ADAS (« Advanced Driver Assistance System »), et donc sans qu'il faille coupler un contacteur au mécanisme de verrouillage/déverrouillage du capot avant CV. Cela offre plusieurs avantages. En effet, lorsque la caméra CO fournit déjà des images pour au moins une autre fonction, il n'y a pas d'augmentation notable de la masse. En outre, il n'y a plus d'implantation spécifique et d'adaptation du mécanisme de verrouillage/déverrouillage à prévoir. De plus, il n'y a plus de risque d'usure mécanique. Enfin, on n'a plus besoin d'une connectique spécifique.

On notera que dans la seconde étape 40-80 on (le calculateur CA) peut comparer la différence de champ de vision déterminée dans la première étape 10-30 à au moins deux différences de champ de vision prédéfinies, correspondant respectivement à des problèmes différents au niveau du capot avant CV. Cette option est destinée à déterminer parmi ces différents problèmes celui qui correspond à la différence de champ de vision prédéfinie qui est similaire à la différence de champ de vision (en cours) déterminée. Dans ce cas, on génère une alarme qui est représentative du problème qui a été déterminé. Cela permet d'établir une espèce de diagnostic, plutôt que d'alerter quelle que soit la cause (et donc quelle que soit la différence de champ de vision déterminée).

Par exemple, les problèmes précités (et prédéfinis) peuvent être choisis parmi au moins :
- un déverrouillage partiel du capot avant CV, illustré sur la figure 2 et correspondant à une première réduction par le bas du secteur angulaire d'observation de la caméra CO suivant la direction verticale,
- une déformation du capot avant CV (non illustrée), provoquée par un choc et correspondant à une deuxième réduction par le bas du secteur angulaire d'observation de la caméra CO suivant la direction verticale, supérieure à la première réduction, et
- une ouverture au moins partielle du capot avant CV, illustrée sur la figure 3 et correspondant au moins à une troisième réduction dans une partie centrale du secteur angulaire d'observation de la caméra CO suivant la direction verticale, supérieure à la deuxième réduction.

En présence d'une telle option, une première alarme pourra signaler un déverrouillage partiel du capot avant CV, une deuxième alarme pourra signaler une déformation du capot avant CV (par exemple consécutive à un choc), ce que ne peut pas détecter un simple contacteur de l'art antérieur, et une troisième alarme pourra signaler une ouverture au moins partielle du capot avant CV.

On notera que le nombre de problèmes différents détectables par le calculateur CA peut être égal à deux ou trois, voire plus encore, et que ces problèmes ne sont pas limités aux trois exemples décrits ci-avant.

On notera également que dans la seconde étape 40-80 on peut générer une alarme qui requiert une action sur le déplacement du véhicule V. Dans ce cas, l'alarme est aussi transmise à un autre calculateur qui est, par exemple, en charge de la supervision du groupe moto-ventilateur et du système de freinage du véhicule V. Cela permet de ralentir le véhicule V en vue de l'arrêter pour permettre à son conducteur de refermer complètement le capot avant et ainsi qu'il soit placé dans son état normal.

Lorsque l'alarme est représentative du problème détecté, l'action sur le déplacement du véhicule V peut être variable. En effet, en présence d'un simple déverrouillage partiel du capot avant CV, on peut ralentir progressivement le véhicule V jusqu'à ce qu'il soit immobilisé de façon sécurisée. En revanche, en présence d'une ouverture au moins partielle du capot avant CV, il faut arrêter le véhicule V le plus vite possible, compte tenu de l'importance du danger.

On notera également qu'afin d'éviter les fausses alarmes, dans la seconde étape 40-80 on peut générer l'alarme en cas de détermination d'une même différence de champ de vision dans au moins deux images acquises successivement. En d'autres termes, le calculateur CA ne va déclencher la génération d'une alarme que si et seulement si il détecte sur au moins deux images acquises successivement la même différence de champ de vision et donc le même problème.

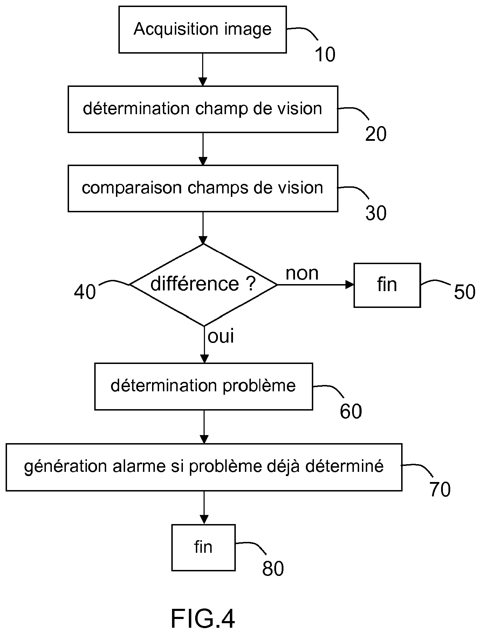

On a schématiquement illustré sur la figure 4 un exemple d'algorithme mettant en œuvre les première 10-30 et seconde 40-80 étapes du procédé de détection décrit ci-avant.

Dans une première sous-étape 10 de la première étape, on acquiert une image avec la caméra CO.

Dans une deuxième sous-étape 20 de la première étape on (le calculateur CA) détermine dans cette image acquise par la caméra CO le champ de vision de cette dernière (CO).

Dans une troisième sous-étape 30 de la première étape on (le calculateur CA) compare ce champ de vision déterminé au champ de vision de référence cv_{ref}.

Dans une quatrième sous-étape 40 de la seconde étape on (le calculateur CA) détermine s'il existe effectivement une différence entre le champ de vision déterminé et cv_{ref}.

En l'absence de différence entre le champ de vision déterminé et cv_{ref}, on (le calculateur CA) met fin au procédé de détection dans une cinquième sous-étape 50 de la seconde étape. On attend ensuite l'acquisition de l'image suivante par la caméra CO.

En revanche, en présence d'une différence entre le champ de vision déterminé et cv_{ref}, on (le calculateur CA) peut, dans une sixième sous-étape 60 de la seconde étape, comparer la différence de champ de vision déterminée dans la quatrième sous-étape 40 à au moins deux différences de champ de vision prédéfinies, correspondant respectivement à des problèmes différents au niveau du capot avant CV, afin de déterminer le problème existant. Puis, dans une septième sous-étape 70 de la seconde étape on génère une alarme (ici représentative du problème déterminé) afin d'avertir (au moins) le conducteur du véhicule V. Puis, on (le calculateur CA) met fin au procédé de détection dans une huitième sous-étape 80 de la seconde étape. On attend ensuite l'acquisition de l'image suivante par la caméra CO.

On notera également que l'invention propose aussi un produit programme d'ordinateur comprenant un jeu d'instructions qui, lorsqu'il est exécuté par des moyens de traitement de type circuits électroniques (ou hardware), comme par exemple le calculateur CA, est propre à mettre en œuvre le procédé de détection décrit ci-avant pour détecter l'état dans lequel est placé le capot avant CV du véhicule automobile V.

On notera également que sur les figures 1 à 3 le dispositif de détection DD est très schématiquement et fonctionnellement illustré par son calculateur CA. Comme évoqué précédemment, ce calculateur CA peut être réalisé au moyen d'au moins un processeur, par exemple de signal numérique (ou DSP (Digital Signal Processor)), éventuellement associé à une mémoire vive pour stocker des instructions pour la mise en œuvre par ce processeur d'une partie du procédé de détection tel que décrit ci-avant. Par ailleurs, le dispositif de détection DD peut comprendre un boitier comportant des circuits intégrés (ou imprimés), reliés par des connections filaires ou non filaires. On entend par circuit intégré (ou imprimé) tout type de dispositif apte à effectuer au moins une opération électrique ou électronique. Par ailleurs, ce dispositif de détection DD peut comprendre au moins une mémoire de masse notamment pour le stockage des images et/ou des données définissant les résultats de ses analyses (d'images) et calculs, une interface d'entrée pour la réception d'au moins les images (qu'éventuellement il met en forme et/ou démodule et/ou amplifie de façon connue en soi), et une interface de sortie pour la transmission des résultats de ses calculs.

Une ou plusieurs sous-étapes de l'une au moins des première et seconde étapes du procédé de détection peuvent être effectuées par des composants différents. Ainsi, le procédé de détection peut-être mis en œuvre par une pluralité de processeurs, mémoire vive, mémoire de masse, interface d'entrée, interface de sortie et/ou processeur de signal numérique. Dans ces situations, le dispositif de détection DD peut-être décentralisé, au sein d'un réseau local (plusieurs processeurs reliés entre eux par exemple) ou d'un réseau étendu.

## Revendications

1. Procédé de détection pour un véhicule (V) de type automobile et comprenant un capot avant (CV) ayant un état normal dans lequel il est totalement fermé afin de circuler et une caméra (CO) couplée à une partie supérieure d'un pare-brise (PB) et acquérant des images vers l'avant dudit véhicule (V), le procédé comprenant une première étape (10-30) dans laquelle on détermine dans chaque image acquise un champ de vision de ladite caméra (CO), puis on compare chaque champ de vision déterminé à un champ de vision de référence, déterminé dans une image de référence acquise lorsque ledit capot avant (CV) était dans ledit état normal, et **caractérisé en ce que** le procédé comprend une seconde étape (40-80) dans laquelle, en cas de détermination d'au moins une différence de champ de vision, on considère que ledit capot avant (CV) n'est pas dans son état normal, et on génère une alarme afin d'avertir un conducteur dudit véhicule (V).

2. Procédé selon la revendication 1, **caractérisé en ce que** dans ladite première étape (10-30) on détermine dans chaque image acquise ledit champ de vision de ladite caméra (CO) en déterminant chaque zone permettant une observation au-delà d'une extrémité avant dudit capot avant (CV).

3. Procédé selon la revendication 1 ou 2, **caractérisé en ce que** dans ladite seconde étape (40-80) on compare ladite différence de champ de vision déterminée à au moins deux différences de champ de vision prédéfinies, correspondant respectivement à des problèmes différents au niveau dudit capot avant (CV), afin de déterminer parmi ces problèmes celui qui correspond à la différence de champ de vision prédéfinie qui est similaire à ladite différence de champ de vision déterminée, et on génère une alarme représentative dudit problème déterminé.

4. Procédé selon la revendication 3, **caractérisé en ce que** dans ladite seconde étape (40-80) lesdits problèmes sont choisis parmi un déverrouillage partiel dudit capot avant (CV) correspondant à une première réduction par le bas d'un secteur angulaire d'observation suivant une direction verticale, une déformation dudit capot avant (CV) correspondant à une deuxième réduction par le bas dudit secteur angulaire d'observation suivant ladite direction verticale, supérieure à ladite première réduction, et une ouverture au moins partielle dudit capot avant (CV) correspondant au moins à une troisième réduction dans une partie centrale dudit secteur angulaire d'observation suivant ladite direction verticale, supérieure à ladite deuxième réduction.

5. Procédé selon l'une des revendications 1 à 4, **caractérisé en ce que** dans ladite seconde étape (40-80) on génère une alarme requérant une action sur un déplacement dudit véhicule (V).

6. Procédé selon l'une des revendications 1 à 5, **caractérisé en ce que** dans ladite seconde étape (40-80) on génère ladite alarme en cas de détermination d'une même différence de champ de vision dans au moins deux images acquises successivement.

7. Produit programme d'ordinateur comprenant un jeu d'instructions qui, lorsqu'il est exécuté par des moyens de traitement, est propre à mettre en œuvre le procédé de détection selon l'une des revendications précédentes pour détecter un état dans lequel est placé un capot avant (CV) d'un véhicule automobile (V).

8. Dispositif de détection (DD) pour un véhicule (V) de type automobile et comprenant un capot avant (CV) ayant un état normal dans lequel il est totalement fermé afin de circuler et une caméra (CO) couplée à une partie supérieure d'un pare-brise (PB) et acquérant des images vers l'avant dudit véhicule (V), le dispositif comprenant au moins un calculateur (CA) déterminant dans chaque image acquise un champ de vision de ladite caméra (CO), puis comparant chaque champ de vision déterminé à un champ de vision de référence, déterminé dans une image de référence acquise lorsque ledit capot avant (CV) était dans ledit état normal, et **caractérisé en ce que** le calculateur est configuré pour en cas de détermination d'au moins une différence de champ de vision, considérer que ledit capot avant (CV) n'est pas dans son état normal, et déclencher la génération d'une alarme afin d'avertir un conducteur dudit véhicule (V).

9. Véhicule automobile (V) comprenant un capot avant (CV) ayant un état normal dans lequel il est totalement fermé afin de circuler et une caméra (CO) couplée à une partie supérieure d'un pare-brise (PB) et acquérant des images vers l'avant dudit véhicule (V), **caractérisé en ce qu'**il comprend en outre un dispositif de détection (DD) selon la revendication 8.

## Patentansprüche

1. Erfassungsverfahren für ein Fahrzeug (V) eines Kraftfahrzeugtyps und mit einer vorderen Haube (CV), die einen normalen Zustand aufweist, in dem sie zum Fahren vollständig geschlossen ist, und einer Kamera (CO), die mit einem oberen Abschnitt einer Windschutzscheibe (PB) gekoppelt ist und Bilder in Richtung der Vorderseite des Fahrzeugs (V) erfasst,wobei das Verfahren einen ersten Schritt (10-30) umfasst, in dem ein Sichtfeld der Kamera (CO) in jedem erfassten Bild bestimmt wird, das Verfahren einen ersten Schritt (10-30) umfasst, in dem ein Sichtfeld der Kamera (CO) in jedem erfassten Bild bestimmt wird, und dann jedes bestimmte Sichtfeld mit einem Referenzsichtfeld verglichen wird, das in einem Referenzbild bestimmt wurde, das erfasst wurde, als sich die vordere Haube (CV) in dem normalen Zustand befand, und **dadurch gekennzeichnet, dass** das Verfahren einen zweiten Schritt (40-80) umfasst, in dem im Falle der Bestimmung mindestens eines Sichtfeldunterschieds davon ausgegangen wird, dass sich die vordere Haube (CV) nicht in ihrem normalen Zustand befindet, und ein Alarm erzeugt wird, um einen Fahrer des Fahrzeugs (V) zu warnen.

2. Verfahren nach Anspruch 1, **dadurch gekennzeichnet, dass** in dem ersten Schritt (10-30) das Sichtfeld der Kamera (CO) in jedem erfassten Bild bestimmt wird, indem jeder Bereich bestimmt wird, der eine Beobachtung über ein vorderes Ende der vorderen Haube (CV) hinaus erlaubt.

3. Verfahren nach Anspruch 1 oder 2, **dadurch gekennzeichnet, dass** in dem zweiten Schritt (40-80) die ermittelte Sichtfelddifferenz mit mindestens zwei vordefinierten Sichtfelddifferenzen verglichen wird, die jeweils unterschiedlichen Problemen an der vorderen Abdeckung (CV) entsprechen, um unter diesen Problemen dasjenige zu bestimmen, das der vordefinierten Sichtfelddifferenz entspricht, die der ermittelten Sichtfelddifferenz ähnlich ist, und dass ein für das ermittelte Problem repräsentativer Alarm erzeugt wird.

4. Verfahren nach Anspruch 3, **dadurch gekennzeichnet, dass** in dem zweiten Schritt (40-80) die Probleme aus einer teilweisen Entriegelung der Frontabdeckung (CV) entsprechend einer ersten Abwärtsverringerung eines Sichtwinkelsektors entlang einer vertikalen Richtung ausgewählt werden, eine Verformung der vorderen Abdeckung (CV), die einer zweiten Verkleinerung von unten des Beobachtungswinkelsektors entlang der vertikalen Richtung entspricht, die größer ist als die erste Verkleinerung, und ein zumindest teilweises Öffnen der vorderen Abdeckung (CV), das zumindest einer dritten Verkleinerung in einem zentralen Abschnitt des Beobachtungswinkelsektors entlang der vertikalen Richtung entspricht, die größer ist als die zweite Verkleinerung.

5. Verfahren nach einem der Ansprüche 1 bis 4, **dadurch gekennzeichnet, dass** in dem zweiten Schritt (40-80) ein Alarm erzeugt wird, der eine Aktion auf eine Bewegung des Fahrzeugs (V) erfordert.

6. Verfahren nach einem der Ansprüche 1 bis 5, **dadurch gekennzeichnet, dass** in dem zweiten Schritt (40-80) der Alarm erzeugt wird, wenn in mindestens zwei nacheinander aufgenommenen Bildern der gleiche Unterschied im Sichtfeld festgestellt wird.

7. Computerprogrammprodukt, das einen Satz von Befehlen umfasst, der, wenn er von einer Verarbeitungseinrichtung ausgeführt wird, geeignet ist, das Erfassungsverfahren nach einem der vorhergehenden Ansprüche zum Erfassen eines Zustands, in dem sich eine Fronthaube (CV) eines Kraftfahrzeugs (V) befindet, zu implementieren.

8. Erfassungsvorrichtung (DD) für ein Fahrzeug (V) des Automobil-Typs und mit einer vorderen Haube (CV), die einen normalen Zustand aufweist, in dem sie für die Fahrt vollständig geschlossen ist, und einer Kamera (CO), die mit einem oberen Teil einer Windschutzscheibe (PB) gekoppelt ist und Bilder in Richtung der Vorderseite des Fahrzeugs (V) erfasst,wobei die Vorrichtung mindestens einen Computer (CA) umfasst, der in jedem erfassten Bild ein Sichtfeld der Kamera (CO) bestimmt, dann jedes bestimmte Sichtfeld mit dem Sichtfeld der Kamera (CO) vergleicht, und die Vorrichtung mindestens einen Computer (CA) umfasst, der in jedem erfassten Bild ein Sichtfeld der Kamera (CO) bestimmt und dann jedes bestimmte Sichtfeld mit einem Referenzsichtfeld vergleicht, das in einem Referenzbild bestimmt wurde, das erfasst wurde, als sich die Fronthaube (CV) in dem normalen Zustand befand, und **dadurch gekennzeichnet, dass** der Computer so konfiguriert ist, dass er im Falle der Bestimmung mindestens eines Unterschieds im Sichtfeld berücksichtigt, dass sich die Fronthaube (CV) nicht in ihrem normalen Zustand befindet, und die Erzeugung eines Alarms auslöst, um einen Fahrer des Fahrzeugs (V) zu warnen

9. Kraftfahrzeug (V) mit einer vorderen Haube (CV), die einen normalen Zustand aufweist, in dem sie zum Fahren vollständig geschlossen ist, und einer Kamera (CO), die mit einem oberen Abschnitt einer Windschutzscheibe (PB) gekoppelt ist und Bilder in Richtung der Vorderseite des Fahrzeugs (V) erfasst, **dadurch gekennzeichnet, dass** es ferner eine Erfassungsvorrichtung (DD) nach Anspruch 8 umfasst.

## Claims

1. A detection method for a vehicle (V) of the automobile type and comprising a front hood (CV) having a normal state in which it is totally closed in order to travel and a camera (CO) coupled to an upper portion of a windshield (PB) and acquiring images toward the front of said vehicle (V),the method comprising a first step (10-30) in which a field of view of said camera (CO) is determined in each acquired image the method comprising a first step (10-30) in which a field of view of said camera (CO) is determined in each acquired image, and then each determined field of view is compared with a reference field of view, determined in a reference image acquired when said front hood (CV) was in said normal state, and **characterized in that** the method comprises a second step (40-80) in which, in the event of determination of at least one field of view difference, said front hood (CV) is considered not to be in its normal state, and an alarm is generated in order to warn a driver of said vehicle (V).

2. Method according to claim 1, **characterized in that** in said first step (10-30) said field of view of said camera (CO) is determined in each acquired image by determining each zone allowing an observation beyond a front end of said front hood (CV).

3. Method according to claim 1 or 2, **characterized in that** in said second step (40-80) said determined field of view difference is compared with at least two predefined field of view differences, corresponding respectively to different problems at the level of said front cover (CV), in order to determine among these problems the one corresponding to the predefined field of view difference which is similar to said determined field of view difference, and an alarm representative of said determined problem is generated.

4. A method according to claim 3, **characterized in that** in said second step (40-80) said problems are selected from a partial unlocking of said front cover (CV) corresponding to a first downward reduction of a viewing angular sector along a vertical direction, a deformation of said front cover (CV) corresponding to a second reduction from below of said viewing angular sector along said vertical direction, greater than said first reduction, and an at least partial opening of said front cover (CV) corresponding to at least a third reduction in a central portion of said viewing angular sector along said vertical direction, greater than said second reduction.

5. Method according to one of claims 1 to 4, **characterized in that** in said second step (40-80) an alarm is generated requiring an action on a displacement of said vehicle (V).

6. Method according to one of claims 1 to 5, **characterized in that** in said second step (40-80) said alarm is generated in case of determination of the same difference in field of view in at least two images acquired successively.

7. A computer program product comprising a set of instructions which, when executed by processing means, is suitable for implementing the detection method according to one of the preceding claims to detect a state in which a front hood (CV) of a motor vehicle (V) is placed.

8. Detection device (DD) for a vehicle (V) of the automobile type and comprising a front hood (CV) having a normal state in which it is totally closed in order to travel and a camera (CO) coupled to an upper part of a windshield (PB) and acquiring images towards the front of said vehicle (V),the device comprising at least one computer (CA) determining in each acquired image a field of view of said camera (CO) the device comprising at least one computer (CA) determining in each acquired image a field of view of the said camera (CO), then comparing each determined field of view with a reference field of view, determined in a reference image acquired when the said front hood (CV) was in the said normal state, and **characterized in that** the computer is configured in order, in the event of determination of at least one difference in field of view, to consider that the said front hood (CV) is not in its normal state, and to trigger the generation of an alarm in order to alert a driver of the said vehicle (V).

9. A motor vehicle (V) comprising a front hood (CV) having a normal state in which it is fully closed for driving and a camera (CO) coupled to an upper portion of a windshield (PB) and acquiring images toward the front of said vehicle (V), **characterized in that** it further comprises a detection device (DD) according to claim 8.
